**Europäisches Patentamt**

**European Patent Office**

**Office européen des brevets**

(19)

(11) Veröffentlichungsnummer : **0 434 705 B1**

(12) **EUROPÄISCHE PATENTSCHRIFT**

(45) Veröffentlichungstag der Patentschrift :
25.11.92 Patentblatt 92/48

(51) Int. Cl.$^5$ : **G01T 7/02**, G01F 23/26

(21) Anmeldenummer : **89909680.4**

(22) Anmeldetag : **08.09.89**

(86) Internationale Anmeldenummer :
**PCT/AT89/00082**

(87) Internationale Veröffentlichungsnummer :
**WO 90/02962 22.03.90 Gazette 90/07**

(54) EINRICHTUNG ZUM MESSEN DER AKTIVITÄT UND DES VOLUMENS RADIOAKTIVER FLÜSSIGKEITEN.

(30) Priorität : **13.09.88 AT 2238/88**

(43) Veröffentlichungstag der Anmeldung :
**03.07.91 Patentblatt 91/27**

(45) Bekanntmachung des Hinweises auf die
Patenterteilung :
**25.11.92 Patentblatt 92/48**

(84) Benannte Vertragsstaaten :
**AT BE CH DE FR GB IT LI NL SE**

(56) Entgegenhaltungen :
**GB-A- 1 604 103**
**US-A- 4 197 456**

(73) Patentinhaber : **Bender + Co. Gesellschaft
mbH
Dr. Boehringer-Gasse 5-11
A-1121 Wien (AT)**

(72) Erfinder : **GÄRTNER, Karl
Milserstrasse 31
A-6060 Hall/Tirol (AT)**

(74) Vertreter : **Holzer, Walter, Dipl.-Ing. et al
Patentanwälte, Dipl.-Ing. Dr. techn. Schütz
Alfred, Dipl.-Ing. Holzer Walter, Dipl.-Ing.
Pfeifer Otto, Fleischmanngasse 9
A-1040 Wien (AT)**

EP 0 434 705 B1

Jouve, 18, rue Saint-Denis, 75001 PARIS

## Beschreibung

Die Erfindung betrifft eine Einrichtung zum Messen der Aktivität und des Volumens radioaktiver Flüssigkeiten. Sie bezieht sich speziell auf die Untersuchung radioaktiver Flüssigkeiten, die in Abfüllanlagen od.dgl. in eine Vielzahl von einheitlichen Behältern abgefüllt werden, z.B. beim Eluieren von Technetium, wobei die Meßeinrichtung einen integralen Bestandteil dieser Anlagen bilden kann.

Um die Aktivität der in solchen Anlagen in eine Vielzahl von Behältern abzufüllenden Flüssigkeiten messen zu können, mußte bisher ein abgemessener Teil der Flüssigkeit aus den einzelnen Behältern entnommen und gesondert in einer Ionisationskammer untersucht werden, wobei mit relativ hoher Spannung (600 V) gearbeitet wurde und das System im Falle der Messung von hohen Aktivitäten sehr rasch zur Ermüdung neigte. Eine direkte Messung der Aktivität der in die Behälter abzufüllenden Flüssigkeit, d.h. eine direkte Zählung der Counts je Volumseinheit, war mit den bekannten Einrichtungen nicht möglich.

Die Erfindung zielt nun darauf ab, eine Meßeinrichtung zu schaffen, die eine direkte Messung der Radioaktivität und zugleich des Volumens von in einheitliche Behälter abzufüllenden radioaktiven Flüssigkeiten ermöglicht. Die erfindungsgemäße Meßeinrichtung ist gekennzeichnet durch die Kombination der Merkmale, daß sie ein Abschirmgehäuse mit einer ersten Kammer aufweist, die ein Gefäß enthält, das einen zentralen Hohlraum und einen die zu untersuchende, elektrisch leitfähige Flüssigkeit aufnehmenden Ringraum aufweist, welcher mit einem Ein- und Auslaß für die Flüssigkeit versehen ist, und mit einer zweiten Kammer, die von der ersten Kammer durch eine Wand mit einer vertikalen Reihe von übereinander angeordneten Fenstern getrennt ist und in der diesen Fenstern benachbart ein zur optischen und elektrischen Abschirmung dienendes zweites Gehäuse mit einer innerhalb desselben angeordneten, der Fensterreihe zugeordneten vertikalen Reihe von Sensoren, insbesondere Halbleiterkristallen, vorgesehen ist, die je an einen Verstärker und an eine Zähleinrichtung angeschlossen sind, wobei in das in der ersten Kammer angeordnete Gefäß zwei getrennte stabförmige Elektroden eintauchen, von denen die eine in den Ringraum eintaucht und mit Hochfrequenz-Impulsen beaufschlagt ist, wogegen sich die andere in dem zentralen Hohlraum des Behälters erstreckt und über einen Verstärker an ein Meßgerät angeschlossen ist.

Durch diese Ausbildung wird eine direkte Messung der Radioaktivität (Counts je Volumseinheit) der Flüssigkeit ermöglicht, die z.B. aus einem Technetiumgenerator in das Gefäß geleitet und aus diesem sodann in einen Aufnahmebehälter weitergeleitet wird, weil die Summe der Sensorsignale ein Maß für die Gesamtstrahlung ist, wobei zugleich das Flüssigkeitsvolumen im Gefäß ermittelt werden kann. Diese Meßergebnisse werden erhalten, ohne daß eine Teilflüssigkeit transferiert werden muß und ohne daß das Meßsystem zu Ermüdungserscheinungen neigt.

Vorzugsweise besteht das zur optischen und elektrischen Abschirmung bestimmte zweite Gehäuse aus Aluminium.

Gemäß einer zur meßtechnischen Erfassung von Technetiumverunreinigungen dienenden Abwandlung der Erfindung wird in der Trennwand des ersten Abschirmgehäuses eine zusätzliche vertikale Reihe von Fenstern vorgesehen, denen im zweiten Abschirmgehäuse eine Reihe von Siliziumkristallen zugeordnet ist, die gegen die Fenster durch eine zusätzliche Abschirmfolie für Technetiumstrahlung abgeschirmt sind und zur Aufnahme von Strahlung dienen, die von der Technetiumverunreinigung herrührt, insbesondere von Molybdän.

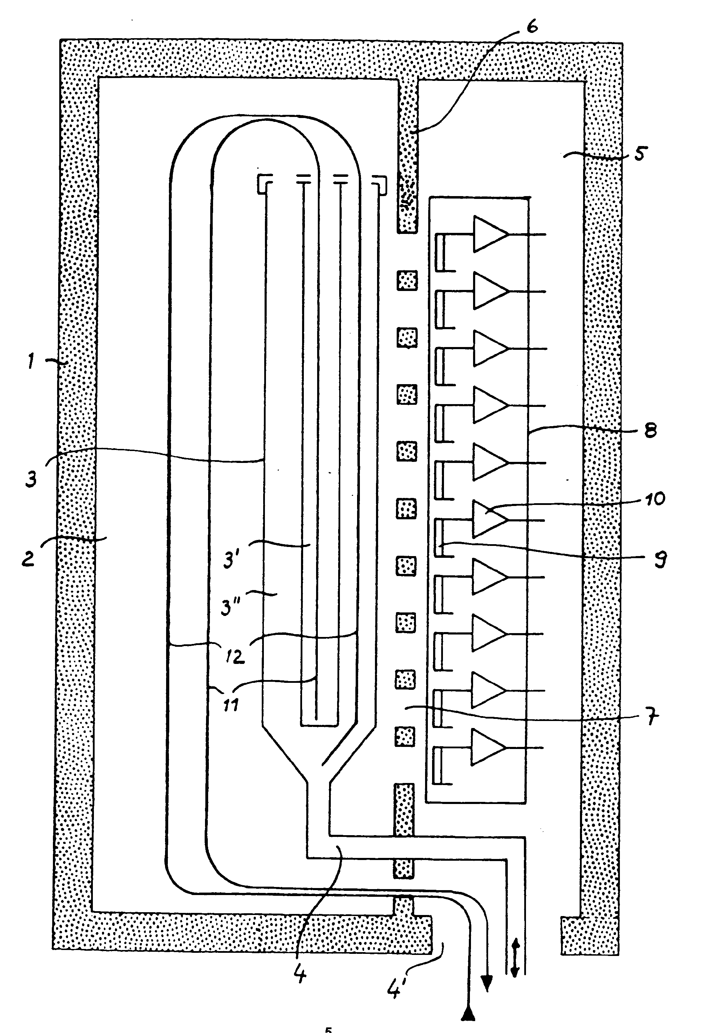

Die Erfindung wird nachfolgend an einem Ausführungsbeispiel unter Bezugnahme auf die Zeichnung näher erläutert, in der eine Einrichtung gemäß der Erfindung in einem schematischen Schnitt dargestellt ist.

Die dargestellte Meßeinrichtung weist ein Gehäuse 1 aus Blei mit einer vertikalen ersten Kammer 2 auf, in welcher ein z.B. aus Kunststoff bestehendes Gefäß 3 fix angeordnet ist, das mit einem zentralen Hohlraum 3' und einem Ringraum 3'' versehen ist, der einen Ein- und Auslaß 4 für die zu untersuchende radioaktive Flüssigkeit aufweist, welcher über eine Gehäuseöffnung 4' nach außen geführt ist. Die Flüssigkeit wird z.B. von einem Technetiumgenerator zugeführt und die gemessene Flüssigkeit jeweils in einen Aufnahmebehälter geleitet. In dem als Strahlungsabschirmung dienenden Gehäuse 1 ist eine zweite Kammer 5 vorgesehen, die von der ersten Kammer 2 durch eine Wand 6 getrennt ist, die eine vertikale Reihe von übereinander angeordneten Durchbrechungen bzw. Fenstern 7 aufweist. Diesen Fenstern 7 benachbart ist ein zur optischen und elektrischen Abschirmung dienendes zweites Gehäuse 8 aus Aluminium angeordnet, in dem sich eine vertikale Reihe von den Fenstern 7 zugeordneten Halbleiterkristallen 9 (Fotodioden bzw. Siliciumphotozellen) befinden, die je an einen Verstärker 10 und eine (nicht gezeigte) Zähleinrichtung angeschlossen sind.

Im Betrieb empfängt jeder der Halbleiterkristalle 9 die Aktivität bzw. Gammastrahlung aus der Flüssigkeit im Gefäß 3 über das zugeordnete Fenster 7. Die Strahlen treffen auf das Halbleiterkristall 9 und schlagen aus dieser Elektronen frei, welche elektrische Impulse erzeugen, die nach entsprechender elektrischer Verstärkung gezählt werden können. Die tatsächlichen Counts werden somit bei der erfindungsgemäßen Einrichtung direkt gezählt. Je höher der Flüssigkeitsstand im Gefäß 3 in der ersten Kammer 2 ist, umso mehr Zähler werden aktiviert. Die gezählten Impulse werden in der zugeordneten Schaltung addiert und ergeben die Gesamtaktivität.

Mit Hilfe von Elektroden 11, 12, die in das in der ersten Kammer 2 angeordnete Gefäß 3 eintauchen, kann zugleich das Volumen der im Gefäß 3 befindlichen Flüssigkeit gemessen werden, die z.B. aus in einer elektrisch leitenden Flüssigkeit, wie einer NaCl-Lösung, gelöstem Technetium besteht. Die Füllstandsmessung beruht auf dem Prinzip der kapazitiven Kopplung. Die Elektroden 11, 12 bestenen aus zwei Nirostastäben, u.zw. einem von einem Oszillator mit Hochfrequenz-Rechteckimpulsen (z.B. 100 kHz) beaufschlagten Geberstab 12, der die Impulse auf die Flüssigkeit in den Ringraum 3″ überträgt, und einem Aufnehmerstab 11, der sich innerhalb des Hohlraumes 3′ des Gefäßes 3 befindet und dessen Hochfrequenz-Ausgangssignale über einen Verstärker zu einem Anzeige- bzw. Meßgerät geleitet werden.

Die Impulsamplitude ist abhängig von der Flüssigkeitssäule, welche den Geberstab 12 umgibt. Je höher der Flüssigkeitsspiegel ist, desto stärker ist die kapazitive Kopplung und umso stärker sind die Impulse auf der Aufnehmerseite.

Im Rahmen der Erfindung kann auch die Konzentration durch Berechnung des Quotienten der ermittelten Werte berechnet werden. Die Meßergebnisse sind in bekannter Weise elektronisch auswertbar. Die erfindungsgemäße Meßeinrichtung arbeitet vorteilhaft mit geringer Versorgungsspannung (z.B. maximal +/- 18 V) und bei Raumtemperatur.

Mit einer Abwandlung der erfindungsgemäßen Ausbildung können Technetiumverunreinigungen, insbesondere von Molybdän, meßtechnisch erfaßt werden. Wird ein Technetiumgenerator eluiert, so ist stets zu gewährleisten, daß im Eluat kein Molybdän vorhanden ist (Molybdändurchbruch). Hiezu mußte bisher eine bestimmte Menge des Eluates entnommen und in einer eigenen Meßkammer untersucht werden.

Erfindungsgemäß wird nun in der Wandung des ersten Abschirmgehäuses 1 eine zusätzliche vertikale Reihe von Fenstern analog den Fenstern 7 vorgesehen. Diesen Fenstern ist im zweiten Abschirmgehäuse 8 eine vertikale Reihe von Halbleiterkristallen, insbesondere Siliziumkristallen, zugeordnet, wobei vor den Siliziumkristallen eine geeignete Abschirmfolie (z.B. aus Blei) angeordnet wird, welche die Technetiumstrahlung absorbiert. Da Technetium eine niedrigere Strahlungsintensität als Molybdän hat, durchdringt die energiereichere, härtere Molybdänstrahlung die Abschirmung und kann gemessen werden. Die Erfindung ist mit besonderem Vorteil in Verbindung mit einer Anlage anwendbar, die in der AT-PS 379.253 beschrieben ist.

Es versteht sich, daß das geschilderte Ausführungsbeispiel im Rahmen der Erfindung verschiedentlich abgewandelt werden kann, insbesondere was die Ausbildung des Zählkreises betrifft. Ferner werden zweckmäßig in der Gehäuseöffnung 4′ ein Keimfilter und eine Be- und Entlüftungseinrichtung vorgesehen.

**Patentansprüche**

1. Einrichtung zum Messen der Aktivität und des Volumens elektrisch leitfähiger radioaktiver Flüssigkeiten, welche ein Abschirmgehäuse (1) mit einer ersten Kammer (2) aufweist, die ein Gefäß (3) enthält, das einen zentralen Hohlraum (3′) und einen die zu untersuchende Flüssigkeit aufnehmenden Ringraum (3″) aufweist, welcher mit einem Ein- und Auslaß (4) für die Flüssigkeit versehen ist, und mit einer zweiten Kammer (5), die von der ersten Kammer (2) durch eine Wand (6) mit einer vertikalen Reihe von übereinander angeordneten Fenstern (7) getrennt ist und in der diesen Fenstern benachbart ein zur optischen und elektrischen Abschirmung dienendes zweites Gehäuse (8) mit einer innerhalb desselben angeordneten, der Fensterreihe zugeordneten vertikalen Reihe von Sensoren (9), insbesondere Halbleiterkristallen, vorgesehen ist, die je an einen Verstärker (10) und an eine Zähleinrichtung angeschlossen sind, wobei in das in der ersten Kammer (2) angeordnete Gefäß (3) zwei getrennte stabförmige Elektroden (11, 12) eintauchen, von denen die eine (12) in den Ringraum (3″) eintaucht und mit Hochfrequenz-Impulsen beaufschlagt ist, wogegen sich die andere (11) in dem zentralen Hohlraum (3′) des Behälters (3) erstreckt und über einen Verstärker an ein Meßgerät angeschlossen ist.

2. Einrichtung nach Anspruch 1, dadurch gekennzeichnet, daß das lichtdichte Abschirmgehäuse (8) aus Aluminium besteht.

3. Einrichtung nach Anspruch 1 oder 2, die zum Untersuchen von Technetium bestimmt ist, dadurch gekennzeichnet, daß zur Ermittlung von Technetiumverunreinigungen, insbesondere von Molybdän, in der Trennwand (6) des ersten Abschirmgehäuses (1) eine zusätzliche vertikale Reihe von Fenstern ausgebildet ist, denen im zweiten Abschirmgehäuse (8) eine zusätzliche vertikale Reihe von Sensoren, insbesondere Siliziumkristallen, zugeordnet ist, wobei vor diesen Sensoren eine Abschirmfolie angeordnet ist, welche die Technetiumstrahlung absorbiert.

**Claims**

1. Device for measuring the activity and the volume of electrically conducting radioactive liquids, which has a screened housing (1) with a first chamber (2) which contains a vessel (3) having a central cavity (3′) and an annular space (3″) for receiving the liquid to be measured, which is provided with an inlet and outlet (4) for the liquid, and with a second chamber (5) which is separated from the first chamber (2) by a wall (6) with a vertical row of windows (7) arranged one above the other and in which adjacent to these windows for optical and electrical screening there is arranged a second housing (8) in which, in association with the row of windows, there is arranged a vertical row of sensors (9), especially semiconductor crystals, which are connected to an amplifier (10) and a counting device respectively, wherein two separate rod-shaped electrodes (11, 12) dip into the vessel (3) arranged in the first chamber (2), of which one electrode (12) dips into the annular chamber (3″) and is subjected to high-frequency impulses, whereas the other electrode (11) extends into the central cavity (3′) of the container (3) and, via an amplifier, is connected to a measuring apparatus.

2.  Device according to claim 1, characterised in that the light-impervious housing (8) is made from aluminium.

3.  Device according to claim 1 or 2, which is designed for examining technetium, characterised in that for determining technetium impurities, especially molybdenum, in the separating wall (6) of the first screened housing (1) there is constructed an additional vertical row of windows to which in the second screened housing (8) is allocated an additional vertical row of sensors, especially silicon crystals, whereby in front of these sensors is arranged a screened foil which absorbs the technetium radiation.

**Revendications**

1.  Dispositif pour mesurer l'activité et le volume de liquides radioactifs électriquement conducteurs, présentant un boîtier de blindage (1) muni d'une première chambre (2) renfermant un récipient (3) comprenant une cavité centrale (3′) et un compartiment annulaire (3″) qui reçoit le liquide à examiner et comporte une entrée et une sortie (4) pour ce liquide, et d'une seconde chambre (5) qui est séparée de la première (2) par une cloison (6) percée d'une rangée verticale de fenêtres (7) superposées , et dans laquelle est prévu, au voisinage de ces fenêtres, un second boîtier (8) servant au blindage optique et électrique, dont l'espace interne renferme, en association à la rangée de fenêtres, une rangée verticale de capteurs (9), en particulier des cristaux semi-conducteurs respectivement raccordés à un amplificateur (10) et à un appareil de comptage, dispositif dans lequel deux électrodes distinctes (11, 12) en forme de barreaux pénètrent dans le récipient (3) situé dans la première chambre (2), électrodes dont l'une (12) s'engage dans le compartiment annulaire (3″) et est sollicitée par des impulsions de haute fréquence, tandis que l'autre (11) s'étend dans la cavité centrale (3′) du réceptacle (3) et est raccordée à un instrument de mesure par l'intermédiaire d'un amplificateur.

2.  Dispositif selon la revendication 1, caractérisé par le fait que le boîtier de blindage (8) étanche à la lumière consiste en de l'aluminium.

3.  Dispositif selon la revendication 1 ou 2, destiné à l'examen du technétium et caractérisé par le fait que, en vue de déterminer des impuretés du technétium, en particulier du molybdène, la cloison (6) du premier boîtier de blindage (1) comporte une rangée verticale supplémentaire de fenêtres à laquelle est associée, dans le second boîtier de blindage (8), une rangée verticale supplémentaire de capteurs consistant notamment en des cristaux de silicium, dispositif dans lequel une feuille de blindage, placée devant ces capteurs, absorbe le rayonnement du technétium.